# EUROPEAN PATENT SPECIFICATION

(11) **EP 0 375 981 B1**
(45) Date of publication and mention of the grant of the patent: **02.08.1995**
(21) Application number: 89122095.6
(22) Date of filing: 30.11.1989
(51) Int. Cl.: G06F 15/177

(54) **Method and apparatus for applying electric power to electronic components**
Verfahren und Anordnung zum Zuführen elektrischer Energie zu elektronischen Komponenten
Procédé et dispositif de commande de puissance électrique appliquée à des composantes électroniques

(30) Priority: 30.12.1988 US 292199
(43) Date of publication of application: 04.07.1990
(73) Proprietor: International Business Machines Corporation, Armonk, N.Y. 10504 (US)
(72) Inventor: Arlington, David Lewis, Eggertsville New York 14226 (US); Morris, Jacqueline K., Binghamton New York 13903 (US); Li, Hehching H., Endicott New York 13760 (US); Radcliffe, Jerry K., Owego New York 13827 (US)
(74) Representative: Jost, Ottokarl, Dipl.-Ing.

(56) References cited:
- EP-A- 0 241 678
- GB-A- 2 202 062
- GB-A- 2 203 869
- US-A- 4 660 141
- US-A- 4 775 931

## Description

### 1. Technical Field

This invention relates generally to techniques for applying power to electronic components located in electronic component locations in computers.

### 2. Description of Related Art

In some computer systems, there can be many part numbers and/or Engineering Changes (EC) used for a single component. This is often particularly true with respect to memory components. It is also common practice to allocate card slots for special system feature cards that are not required for normal system operation, and the actual cards installed varies from machine to machine. The system must be able to accurately identify exactly what parts are installed for several reasons.

For instance, there may be several different memory card part numbers which can be installed in a given card location depending on the system configuration. These different card part numbers may all use the same interface chip part number. Such a multiple-use chip has unique register initialization requirements for each card part number in order to accommodate for the different memory array technologies, the clock speed, card densities, and the system that it is operating in. The same card may be used in multiple systems. One system may have single card operation. Another system may use two of the memory cards working as a pair and the two cards must be compatible. This concept of the multiple-use chip programmability feature is described more fully in European patent application 89 108 812.2. Without proper compatibility, the card would not operate correctly. There is also an exposure (especially when dynamic RAM arrays are involved) that a part supplied with invalid initialization data could run out of specification without being detected by the system. The chip operates differently in each of these environments and the initialization data controls these operations.

There is also the possibility that there are different voltages and/or current requirements for each of the different configurations of the system based on the number and types of cards installed. It is therefore crucial to the power supply design to know what current limit is considered excessive for each of the configurations so that the voltage/current limits can be set appropriately for safety considerations and to prevent device burnout. On the other hand if the current limit is set too low for the configuration, power up may not complete without over-current sensors shutting down the power supply. This information may be needed prior to applying power to the parts in question. IBM Technical Disclosure Bulletin Vol. 29, No. 2 (July 1986) at p.806 describes a prior technique for avoiding overcurrent by measuring the current flow through sense resistors on each card. The present invention operates on a simpler premise and provides additional benefits and information at the same time.

The next point to consider is that the part information needed to identify the correct configuration data may be available the majority of the time to the bring-up controls. However, if a part is replaced there may be no guarantee that the update is made to the system configuration data or that the entry is done correctly. U.S. Patent No. 4,556,953 discloses a system for identifying which of several possible interface cards is present, and provides for self-configuration of the system to accommodate the interchanging of circuit cards.

In UK Patent Application GB 2 202 062 an apparatus for checking a system configuration in an electronic system is disclosed in which each circuit card type is allocated a predetermined code which is hard-wired into the card during manufacture. A central configuration map is stored in a central processor which downloads segments of that map to each card-containing shelf in the system. A shelf controller interrogates each card on every read or write operation to determine the card type and effects a comparison between the card identity and the configuration map.

Furthermore, in U.S. Patent Application 4,660,141 a self configuring computer network with automatic bus exchange of module identification numbers and processor assigned module numbers is disclosed. In a computer network having a system bus, a processor connected to the system bus, and a plurality of local processors each connected to a respective local bus and each having a plurality of interface cards attached thereto, each interface card includes an identification ROM. Each interface card responds to an initial reset signal enabling that interface card to respond to the same initial address. Each local processor outputs that initial address. The closest interface card of each local bus responds by transmitting information from its identification ROM to the requesting local processor, which then assigns an address to the closest interface card, which then automatically sets circuitry that enables the next closest interface card to respond to the initial address. This procedure is repeated to assign unique addresses to all of the interface cards.

However, several different circuits are required all of which use the system address/data bus, thereby creating priority problems as well as identifying the circuit-cards after normal system power has been applied. These disadvantages have been avoided in the present invention.

Another factor to consider is the number of circuits as well as the number of input/output signals which are required in order to properly identify the type of circuit component installed as well as its location in the system.

In view of all the foregoing, it is an object of the invention to provide a method and apparatus for accurately identifying circuit components such as interface cards which are currently installed in a system. A related object is to also identify the installation location of circuit components which are physically capable of being installed in a number of different locations in the system.

Another object is to assure that proper initialization data is supplied to each part currently installed.

An additional important object is to identify component parts in a system prior to applying power to the operating functional circuits in the component part.

A further object is to be able to identify replaced or upgraded parts before they are actually activated for use. A related object is to know in advance the consequences which newly installed parts will have on existing parts before either the new parts or the existing parts have power applied to them.

Still another object is to provide in the preferred form of the invention a dedicated circuit which is used solely for identification and location of system components prior to applying power to the active circuits in the system components. A related object is to provide only passive circuit elements such as diodes or the absence of diodes which will provide an identification response to a polling signal.

Yet another object is to provide a single configuration bus which communicates with each position slot capable of holding a system component and which carries back either a null identification signal or an encoded identification signal for comparison to system configuration data contained in a reference such as an EEPROM.

Accordingly, the invention as set forth in claims 1 and 4 provides a series of parallel input circuit lines connectable to each circuit card or other component for carrying sequential polling signals, and further provides a single configuration bus connected to the output of passive circuit components located in such circuit card or other component. The unique identification number encoded in such passive circuit components is thereby transmitted along the configuration bus to a comparator whenever the slot holding such circuit card is polled by a query signal. Thus, improper circuit components and/or improperly located circuit components are detected before any power is applied to the system. Additionally, initialization can be done based on the actual components installed in the system. This simple but comprehensive polling can be done every time a request is made to power up the computer system, and the reliability of the polling circuitry is virtually guaranteed since it is dormant during the normal operation of the system. Thus, any malfunction of the system is unlikely to cause any damage to the polling circuitry.

It should be understood that the details in this invention specification are given by way of example and illustration only, and various changes and modifications will become apparent to those skilled in the art.

### BRIEF DESCRIPTION OF DRAWINGS

- Fig. 1: is a block diagram showing a presently preferred embodiment of the invention;
- Fig. 2: shows the connection between and eight-bit configuration bus and various circuit components installed in a computer system;
- Fig. 3: is a timing diagram showing the power on sequence;
- Fig. 4: is a timing diagram showing the configuration function;
- Fig. 5: is a schematic circuit diagram of the physical card representation;

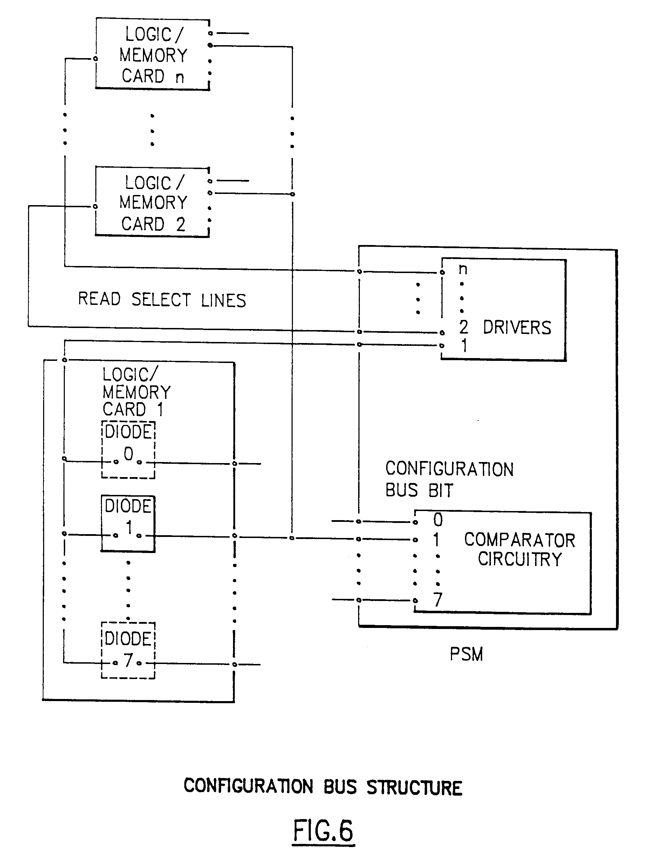

- Fig. 6: is a block diagram showing the configuration bus structure;
- Fig. 7: is a schematic diagram of each card circuit; and
- Fig. 8: is a schematic diagram showing the comparator function.

### DETAILED DESCRIPTION OF THE PREFERRED EMBODIMENT

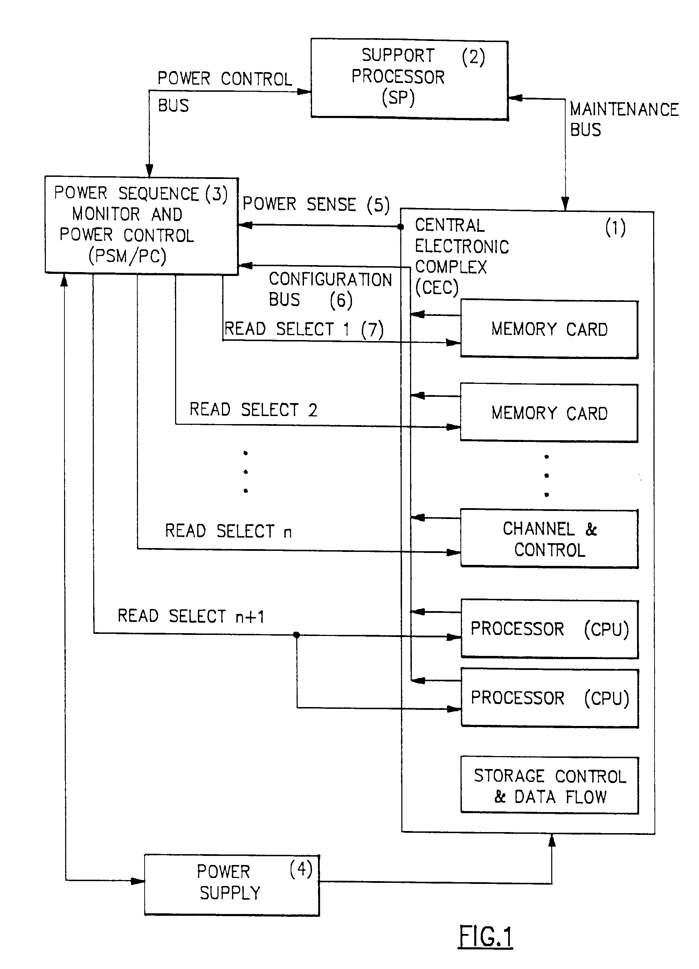

Fig. 1 shows the environment of the invention. The central electronic complex (CEC) (1) consists of the CPU, storage controls, memory, and channels/controls. The memory can exist in a variety of card options. Feature card slots can also exist such as: number of channels, number of memory cards, types of processor cards. The support processor (SP) (2) provides support for the CEC by performing a variety of tasks such as initiating the power on sequence, initializing components, and keeping track of the status of the machine. As used herein, "power on sequence" will refer to the period of time from when powering up of the CEC is desired to the time when the system is initialized and ready to run normal system functions. Power to the SP is required prior to the CEC being powered up and after the CEC power down is complete because the SP controls these functions. The power sequence monitor & power control (PSM/PC) (3) is microprocessor driven and provides system power control to the CEC. The PSM provides AC/DC power on/off sequencing, system reset functions, and fault protection for the CEC.

With the rack Autoconfiguration of the present invention present, the PSM/PC performs internal RAM and ROM tests and monitors the SP printer interface or processor operator panel for a Power-on Request. The power sense lines (5) from the CEC (1) to the PSM (3) provides feedback to the PSM (3) to indicate if power faults exist and if so relays controls to the power supply (4) to shut down. The power supply (4) is controlled by the PSM/PC (3) to apply power to the CEC (1). Fig. 1 also shows the connection of the configuration bus (6) from the logic cards in the CEC (1) to the PSM/PC (3) and the read selects (RS) (7) from the PSM/PC (3) to the CEC (1).

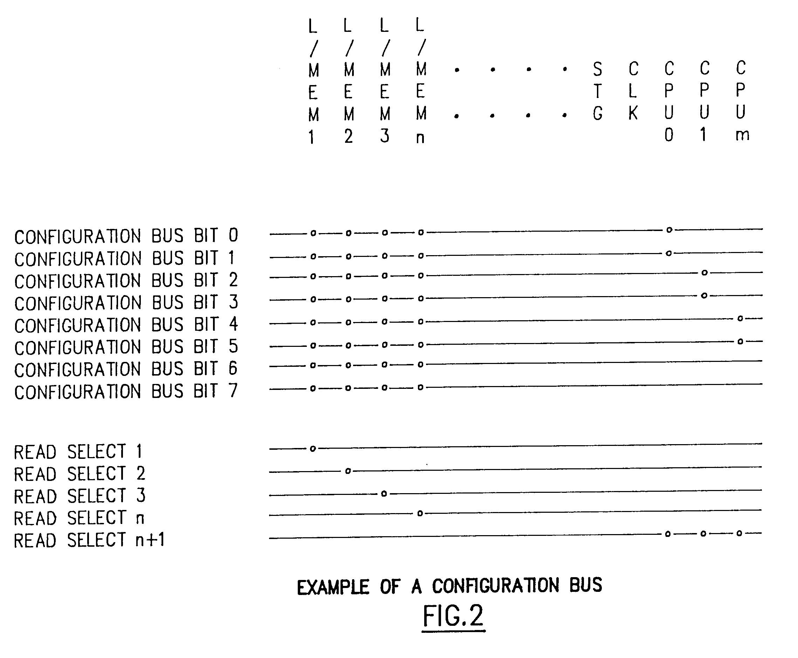

Fig. 2 shows an example of a configuration bus connected up to a CEC. This shows an eight bit configuration bus with n plus one RS signals. There are 'n'logic/memory cards (thus `n' RS) that are connected in parallel on the configuration bus but are read serially by activating one RS at a time. This also shows storage control and clock control cards that are not connected to the bus. There are also `m' of the CPU cards that are each only connected to two of the configuration bus bits, and two CPU cards are not connected to the same configuration bus bits. All `m' of the CPU cards are connected to the same RS so the data from these cards are collected simultaneously. The process of collecting this data is described more fully below.

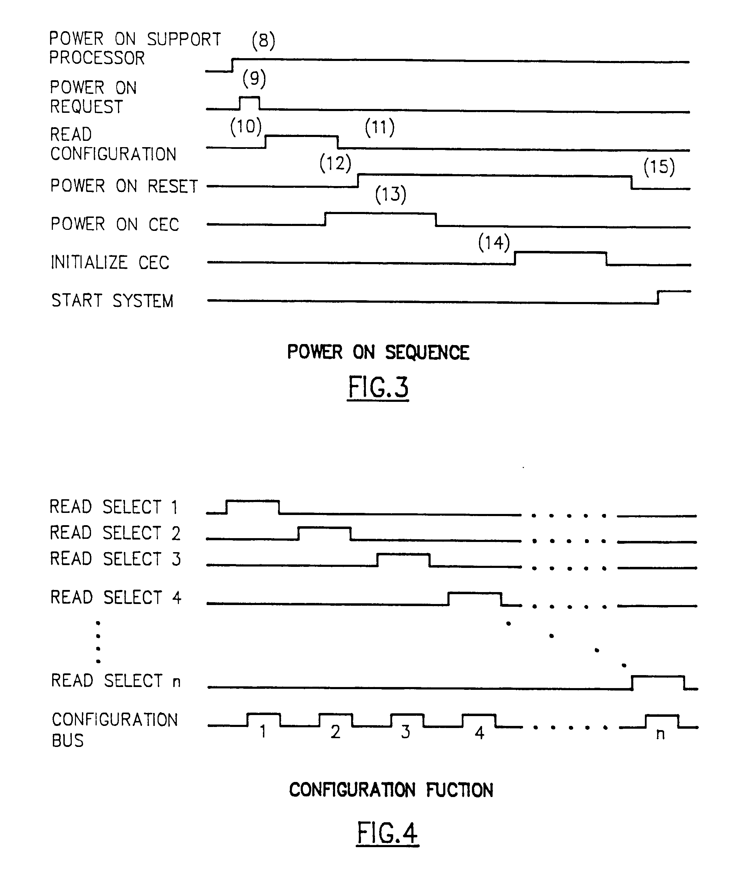

Fig. 3 shows the timing diagram of the power on sequence. The SP is powered on (8). When the SP power on is complete, a power on request is issued from the SP to the PSM (9). The PSM then reads the system configuration data from the configuration bus (10). The power on reset protective circuitry (12) is activated to prevent device burnout while the power is ramping up. This remains active while power is applied to the CEC (13) until the CEC is initialized to a reset state (14). After this procedure is complete the system operations can begin.

Fig. 4 shows how the configuration data is read. It is an expanded view of the time between points 10 and 11 in Fig. 3. Each of the RS, 2 through n, is activated one at a time from the PSM/PC to the cards in the CEC. When RS1 is activated, only the card(s) that have RS1 as an input are able to put the data on the configuration bus. Sequentially, the rest of the RS are activated.

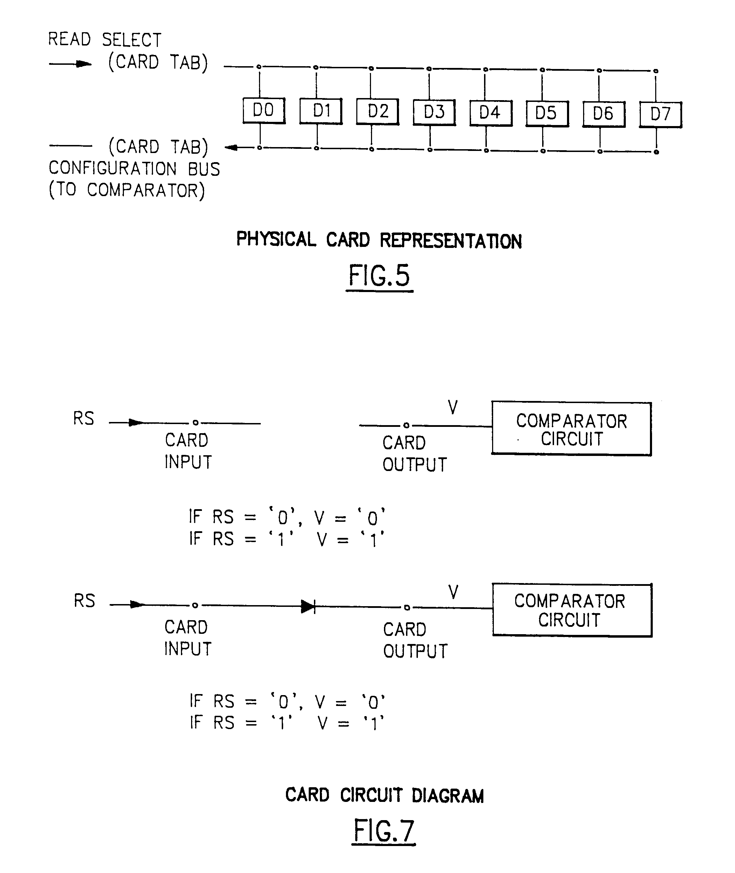

Fig. 5 is an expanded view of the connection to the configuration bus of the memory/logic cards. One of the pins is the RS pin (read select) which is the card input for the polling mechanism. The other eight pins are the output pins whose logical state depends on the contents of the boxes labeled D0-D7 in Fig. 5. One of the pins can be used as a parity bit for cards. Each of these pins has a binary value and the eight bits will be encoded to represent one of 256 possible card parts, if parity is not used, or one of 128 possible card parts, if parity is used. If a mismatch is detected between the EEPROM data and the data obtained via this polling mechanism, the parity bit is a means to identify if a fault occurs in this polling mechanism. Because of the polling mechanism used, multiple cards can be connected to the same eight bit bus provided that each card sharing a particular bit of the bus has its own RS as shown in Fig. 2. The bus structure is used to connect the outputs for the program pins from the memory/logic cards together. The bus structure is possible if a circuit such as the following is used.

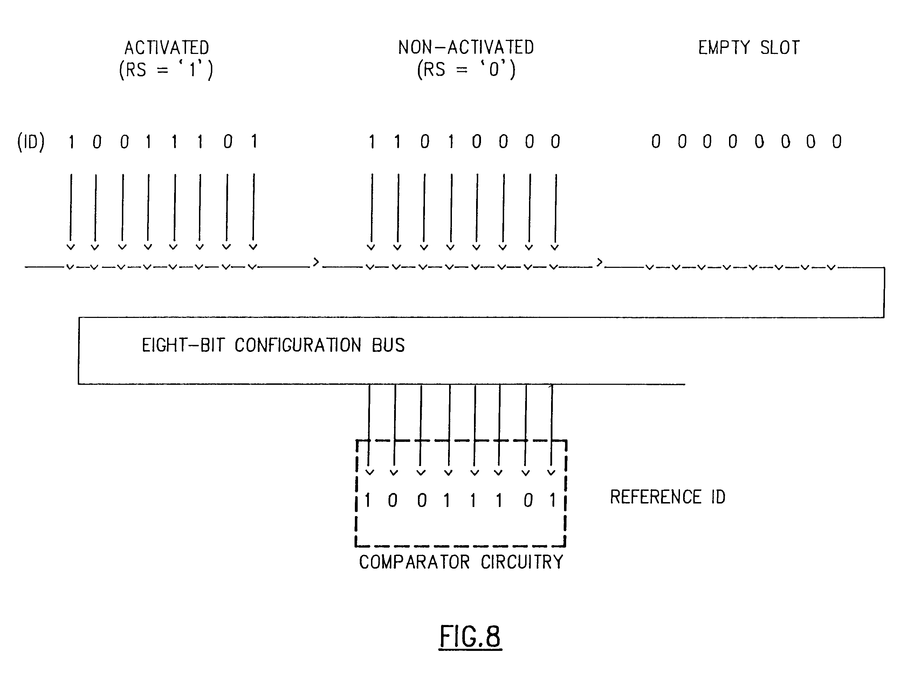

The card portion of the invention is implemented by simple circuitry incorporating diodes or the like. The RS signal is a memory card input supplied by the PSM and is connected to a card output pin via a diode or an open circuit as shown in Fig. 7. The binary value of each pin is achieved by either having a diode present (logical 1) or not having the diode present, thus leaving an open circuit (logical 0). The RS signal is activated (plus V equals 1) to only one of the cards sharing the pin bus. The remainder of the cards sharing the bus would have the RS inactive leaving the eight program pin outputs for each of those three cards at a logical 0. The card with the RS active would keep the net at logical 0 if the diode is absent or would force the net to a logical 1 if the diode was present.

The value read from the eight pins from one card are then used by the system to determine the type of memory card in the slot that corresponds to the active RS. System software will decode this input and compare it to the EEPROM data (see Fig. 8). If the two agree, the corresponding Engineering Data Table (which contains the program register data that is to be used to initialize the card) is located and, if required, the power supply voltage/current limits will be set. This diode decode to program register loading action is key to taking the generic memory array cards and turning each of them into the many application specific memory cards based on attributes such as the type of array, the amount of memory on the card, the system cycle time, and the design level.

Only one RS can be activated at a time to a set of cards that share the common bus. The polling process is complete after all RSs have been activated one at a time. This polling action occurs using only power from the power sense monitor card and may therefore take place before power is applied to the memory cards.

## Claims

1. A method for applying power to electronic components located in electronic component locations in a central electronic complex (1) including a support processor (2) and a power supply means (3, 4) for selectively providing power to the electronic component locations, after the actual system configuration was checked by comparing stored configuration date with data sent back from the system components after interrogation, characterized by the steps of:
issuing a power on request signal (9) from said support processor (2) to said power supply means; (3, 4)
in response to the power on request signal (9) and prior to delivery of power to the component locations (13), sending a sequence of read select signals (RS 1-n) from said power supply means (3, 4) to the electronic component locations, each read select signal being provided to a respective component location;
in response to the sequence of read select signals, sending from each electronic component location of a plurality of component locations to said power supply means (3, 4) a sequence of identification signals which identify an electronic component at the electronic component location; and
in response to each sequence of identification signals, providing from said power supply means a power signal to the electric component location from which the sequence of identification signals was received.

2. The method of claim 1 further including the steps of:
programming the power supply means (3, 4) with a plurality of configuration signals, each of the configuration signals identifying a respective type of electronic component memory card, CPU card, ...);
and wherein the step of providing a power signal includes:
in response to a sequence of identification signals received from a component location, identifying an electronic component at the component location by comparing the sequence of identification signals with the plurality of configuration signals; and
in response to the identification of the electronic component, setting the current level of the power signal provided to the component location to a predetermined level based on the electronic component type.

3. The method of claim 1 wherein the step of providing a power signal includes providing a plurality of power signals, each power signal being provided to a respective component location from which a sequence of identification signals was received; and
in response to the plurality of power signals, initially setting the central electronic complex (1) to a reset state.

4. An apparatus for applying power to electronic components located in electronic component locations in a central electronic complex (CEC) including a plurality of electronic component locations and a support processor means (2) for initiating the delivery of power to said control electronic complex, (CEC) a power delivery system comprising:
sensing means connected to said support processor (2) for receiving a power on request signal (9);
configuration bus means (6) for conducting a sequence of signals from each said component location;
read select bus means (7) for conducting a read select signal (RS 1-n) to each said component location;
means (3, 4) responsive to said power on request signal (9) for providing a sequence of said read select signals on said read select bus means;
means (D0-D7) in an electronic component at a component location for generating a sequence of identification signals on said configuration bus in response to a read select signal;
power level means (3) for generating a power level signal in response to said sequence of identification signals, the power level signal being conditioned to represent a power current level for a type of electronic component corresponding to the electronic component; and
power supply means (4) responsive to said power level signal for providing power at the power current level to the component location.

## Patentansprüche

1. Verfahren zum Zuführen von Energie zu elektronischen Komponenten, die in elektronischen Komponentenanordnungen in einem zentralen elektronischen Komplex (1) angeordnet sind, der einen Unterstützungsprozessor (2) und Energieversorgungsmittel (3, 4) zum selektiven Bereitstellen von Energie an die elektronischen Komponentenanordnungen, nachdem die tatsächliche Systemkonfiguration überpüft wurde, indem ein gespeichertes Konfigurationsdatum mit von den Systemkomponenten nach einer Abfrage zurückgesandten Daten verglichen wird, enthält, gekennzeichnet durch die folgenden Schritte:
Aussenden eines Einschaltanforderungssignals (9) vom Unterstützungsprozessor (2) an die Energieversorgungsmittel (3, 4);
Senden einer Folge von Leseauswahlsignalen (RS 1 bis n) von den Energieversorgungsmitteln (3, 4) an die elektronischen Komponentenanordnungen als Antwort auf das Einschaltanforderungssignal (9) und vor der Zuführung von Energie zu den Komponentenanordnungen (13), wobei jedes Leseauswahlsignal an eine entsprechende Komponentenanordnung bereitgestellt wird;
Senden einer Folge von Identifikationssignalen, die eine elektronische Komponente bei der elektronischen Komponentenanordnung identifizieren, von jeder elektronischen Komponentenanordnung einer Vielzahl von Komponentenanordnungen an die Energieversorgungsmittel (3, 4) als Antwort auf die Folge der Leseauswahlsignale; und
Bereitstellen eines Energiesignals von den Energieversorgungsmitteln an die elektronische Komponentenanordnung, von der die Folge der Identifikationssignale empfangen wurde, als Antwort auf jede Folge von Identifikationssignalen.

2. Verfahren nach Anspruch 1, weiterhin enthaltend die folgenden Schritte:
Programmieren der Energieversorgungsmittel (3, 4) mit einer Vielzahl von Konfigurationssignalen, wobei jedes der Konfigurationssignale einen entsprechenden Typ einer elektronischen Komponente (Speicherkarte, CPU-Karte, ...) identifiziert;
und wobei der Schritt des Bereitstellens eines Energie-Signals enthält:
Identifizieren einer elektronischen Komponente bei der Komponentenanordnung durch Vergleichen der Folge der Identifikationssignale mit der Vielzahl der Konfigurationssignale als Antwort auf eine Folge von von einer Komponentenanordnung empfangenen Identifikationssignalen; und
Setzen des Strompegels des Energiesignals, das der Komponentenanordnung zu einem vorbestimmten, auf den Typ der elektronischen Komponente basierenden Pegel bereitgestellt wird, als Antwort auf die Identifikation der elektronischen Komponente.

3. Verfahren nach Anspruch 1, wobei der Schritt des Bereitstellens eines Energiesignals das Bereitstellen einer Vielzahl von Energiesignalen enthält, wobei jedes Energiesignal einer entsprechenden Komponentenanordnung, von der eine Folge von Identifikationssignalen empfangen wurde, bereitgestellt wird; und
Setzen des zentralen elektronischen Komplex (1) auf einen Rücksetzzustand am Anfang als Antwort auf die Vielzahl der Energiesignale.

4. Einrichtung zum Zuführen von Energie zu elektronischen Komponenten, die in elektronischen Komponentenanordnungen in einem zentralen elektronischen Komplex (CEC) angeordnet sind, der eine Vielzahl von elektronischen Komponentenanordnungen und Unterstützungsprozessormittel (2), um das Zuführen von Energie zum zentralen elektronischen Komplex (CEC) zu beginnen, und ein Energiezuführungssystem enthält, umfassend:
mit dem Unterstützungsprozessor (2) verbundene Aufnahmemittel zum Empfangen eines Einschaltanforderungssignals (9);
Konfigurationsbusmittel (6) zum Führen einer Folge von Signalen aus jeder Komponentenanordnung;
Leseauswahlbusmittel (7) zum Führen eines Leseauswahlsignals (RS 1 bis n) an jede Komponentenanordnung;
Mittel (3, 4), die auf das Einschaltaufforderungssignal (9) reagieren, zum Bereitstellen einer Folge von Leseauswahlsignalen auf den Leseauswahlbusmitteln;
Mittel (D0 bis D7) in einer elektronischen Komponente bei einer Komponentenanordnung zum Erzeugen einer Folge von Identifikationssignalen auf dem Konfigurationsbus als Antwort auf ein Leseauswahlsignal;
Energiepegelmittel (3) zum Erzeugen eines Energiepegelsignals als Antwort auf die Folge von Identifikationssignalen, wobei das Energiepegelsignal ausgebildet ist, einen Energiestrompegel für einen der elektronischen Komponente entsprechenden Typ einer elektronischen Komponente zu repräsentieren; und
Energieversorgungsmittel (4), die auf das Energiepegelsignal reagieren, zum Bereitstellen von Energie beim Energiestrompegel an die Komponentenanordnung.

## Revendications

1. Procédé pour appliquer une puissance à des composants électroniques situés dans des emplacements pour composants électroniques dans un complexe électronique central (1) comportant un dispositif de traitement de support (2) et un moyen (3, 4) formant source d'alimentation pour fournir de la puissance de manière sélective aux emplacements pour composants électroniques, après que la configuration réelle du système a été contrôlée en comparant les données de configuration enregistrée avec les données renvoyées par les composants du système après interrogation, caractérisé par les étapes suivantes:
délivrance d'un signal de demande d'alimentation (9) en provenance dudit dispositif de traitement de support (2) audit moyen (3, 4) formant source d'alimentation;
en réponse au signal de demande d'alimentation (9) et avant la délivrance de puissance aux emplacements (13) pour composants, envoi d'une séquence de signaux de sélection de lecture (RS 1-n) en provenance desdits moyens (3, 4) formant source d'alimentation aux emplacements pour composants électroniques, chaque signal de sélection de lecture étant fourni à un emplacement respectif pour composant;
en réponse à la séquence de signaux de sélection de lecture, envoi par chaque emplacement pour composant électronique d'une pluralité d'emplacements pour composants, audit moyen (3, 4) formant source d'alimentation, d'une séquence de signaux d'identification qui identifient un composant électronique dans l'emplacement pour composant électronique; et
en réponse à chaque séquence de signaux d'identification, fourniture par ledit moyen formant source d'alimentation d'un signal de puissance à l'emplacement pour composant électronique à partir duquel la séquence de signaux d'identification a été reçue.

2. Procédé selon la revendication 1, comprenant en outre les étapes suivantes:
programmation du moyen (3, 4) formant source d'alimentation avec une pluralité de signaux de configuration, chacun des signaux de configuration identifiant un type respectif de composant électronique (carte à mémoire, carte CPU, ...);
et dans lequel l'étape de fourniture d'un signal de puissance comporte:
en réponse à une séquence de signaux d'identification reçus en provenance d'un emplacement pour composants, identification d'un composant électronique à l'emplacement pour composants en comparant la séquence de signaux d'identification avec la pluralité de signaux de configuration; et
en réponse à l'identification du composant électronique, établissement du niveau courant du signal de puissance fourni à l'emplacement pour composant à un niveau prédéterminé basé sur le type de composant électronique.

3. Procédé selon la revendication 1 dans lequel l'étape de fourniture d'un signal de puissance comporte la fourniture d'une pluralité de signaux de puissance, chaque signal de puissance étant fourni à un emplacement pour composant respectif à partir duquel une séquence de signaux d'identification a été reçue; et
en réponse à la pluralité de signaux de puissance, établissement initial du complexe électronique central (1) à un état de remise à zéro.

4. Appareil pour appliquer une puissance à des composants électroniques situés dans des emplacements pour composants électroniques dans un complexe électronique central (CEC) comportant une pluratité d'emplacements pour composants électroniques et un moyen (2) formant dispositif de traitement de support pour amorcer la délivrance de puissance audit complexe électronique central (CEC), le système de délivrance de puissance comprenant:
un moyen de détection connecté audit dispositif (2) de traitement de support pour recevoir une puissance sur des signaux de demande (9);
un moyen (6) à bus de configuration pour appliquer une séquence de signaux à partir de chaque emplacement pour composant;
un moyen (7) de bus de sélection de lecture pour appliquer un signal de sélection de lecture (RS 1-n) à chacun desdits emplacements pour composants;
un moyen (3, 4) sensible audit signal de demande d'alimentation (9) pour fournir une séquence desdits signaux de sélection de lecture sur ledit moyen à bus de sélection de lecture;
un moyen (D0 - D7), dans un composant électronique à un emplacement pour composant, pour générer une séquence de signaux d'identification sur ledit bus de configuration en réponse à un signal de sélection de lecture;
un moyen (3) à niveau de puissance pour générer un signal de niveau de puissance en réponse à ladite séquence de signaux d'identification, le signal de niveau de puissance étant conditionné pour représenter un niveau courant de puissance pour un type de composant électronique correspondant au composant électronique; et
un moyen (4) formant source d'alimentation sensible audit signal de niveau de puissance pour fournir de la puissance au niveau courant de puissance à l'emplacement pour composant.
